# EUROPÄISCHE PATENTSCHRIFT

(11) **EP 1 186 875 B1**
(45) Veröffentlichungstag und Bekanntmachung des Hinweises auf die Patenterteilung: **12.09.2007**
(21) Anmeldenummer: 01117319.2
(22) Anmeldetag: 18.07.2001
(51) Int. Cl.: G01L 19/00, G01L 19/04, G01L 9/00

(54) **Druckmesszelle mit Temperatursensoren und Druckmessverfahren**
Pressure measurement cell with temperature sensors and method for measuring pressure
Cellule de mesure de la pression avec des capteurs de température et procédé de mesure de la pression

(30) Priorität: 07.09.2000 DE 10044078
(43) Veröffentlichungstag der Anmeldung: 13.03.2002
(73) Patentinhaber: VEGA Grieshaber KG, 77709 Wolfach (DE)
(72) Erfinder: Jacob, Jörn, 77709 Wolfach-kirnbach (DE); Böhler, Ewald, 77709 Wolfach (DE)
(74) Vertreter: Patentanwälte Westphal, Mussgnug & Partner

(56) Entgegenhaltungen:
- EP-A- 0 764 839
- DE-A- 4 011 901
- DE-A- 4 111 118
- US-A- 5 383 367
- US-A- 5 394 345

## Beschreibung

Die vorliegende Erfindung betrifft eine Druckmeßzelle mit einem Temperatursensor und ein Verfahren zur Druckmessung mit einem solchen Sensor. Temperatursensoren sind häufig in Druckmeßzellen integriert, um den statischen Temperaturfehler bei der Druckmessung zu kompensieren. Bei keramischen Druckmeßzellen ist dieser Temperatursensor meistens auf der Rückseite der Keramik appliziert, er kann aber auch in einer anschließenden Auswerteelektronik enthalten sein.

Druckmesszellen sind z. B. in DE 41 11 118 A1 und EP 0 764 839 A1 beschrieben.

Wenn sich die Druckmeßzelle in thermischem Gleichgewicht mit ihrer Umgebung befindet, kann die Temperaturabhängigkeit der Druckmessung mit Hilfe eines solchen Temperatursensors und einer geeigneten Nachbereitung des Meßsignals gut kompensiert werden. Schnelle Änderungen der Temperatur können jedoch zu erheblichen Meßfehlern führen, die mit den bekannten Verfahren nicht sinnvoll kompensierbar sind. Dieses Problem kann bei Druckmeßzellen diverser Bauarten auftreten, ist aber besonders schwerwiegend bei keramischen Meßzellen mit flacher Membran.

Um dieses Problem zu lösen, wird gemäß der vorliegenden Erfindung vorgeschlagen, bei einer Druckmeßzelle mit einem Grundkörper und einer an dem Grundkörper angeordneten, durch einen zu messenden Druck verformbaren Membran zwei Temperatursensoren in Richtung eines erwarteten Temperaturgradienten beabstandet anzuordnen.

In den meisten Fällen, in denen die Druckmeßzelle einem thermischen ungleichgewicht ausgesetzt ist, ist mit einem Temperaturunterschied zwischen einem auf die Membran der Meßzelle einwirkenden Medium und der von dem Medium abgewandten, mit der Umgebung thermisch verbundenen Rückseite der Druckmeßzelle d.h. einem Temperaturgradienten von der Vorder- zur Rückseite der Druckmeßzelle zu rechnen. Deshalb ist der erste Temperatursensor vorzugsweise an der die Vorderseite der Druckmeßzelle bildenden Membran, wo er Temperaturänderungen des Mediums schnell zu folgen vermag, und der zweite an der von der Membran abgewandten Rückseite des Grundkörpers der Druckmeßzelle angeordnet.

Diesem Vorschlag liegt die Erkenntnis zugrunde, daß die durch Temperaturänderungen hervorgerufenen Verfälschungen des Druckmeßwerts zurückzuführen sind auf durch einen Temperaturgradienten verursachte innere Verformungen der Meßzelle. Wenn nämlich die Membran der Meßzelle einem plötzlich erwärmten Medium ausgesetzt ist, vermag sie dieser Temperaturänderung wesentlich schneller zu folgen als der Grundkörper der Meßzelle, der von der Membran durch einen Zwischenraum oder eine Kammer beabstandet und somit gegen das Fluid thermisch isoliert ist. Gleichzeitig hindert eine steife Verbindung zwischen Membran und Grundkörper die Membran daran, sich frei auszudehnen, so daß die thermische Ausdehnung die Membran dazu zwingt, sich zu krümmen. Diese Krümmung -zum Grundkörper hin oder von ihm fort- bewirkt die Verfälschung der Druckmessung. Durch Erfassen eines Temperaturgradienten ist es erfindungsgemäß möglich, zu erkennen, wann die Gefahr einer meßwertverfälschenden Krümmung der Membran gegeben ist und, wenn eine solche Gefahr besteht, die Meßwerte der Druckmeßzelle zu ignorieren oder unter Berücksichtigung der Membranverkrümmung zu kompensieren.

Ein typischer Abstand zwischen dem ersten Temperatursensor und einer dem zu messenden Druck ausgesetzten Außenfläche der Membran kann je nach Dicke der Membran, d.h. je nach Dimensionierung der Druckmeßzelle bzw. der durch sie zu messenden Drucke, zwischen 0,1 und 3 mm betragen.

Um eine effiziente Wärmeübertragung zwischen dem Medium und dem ersten Temperatursensor zu gewährleisten, ist dieser erfindungsgemäß in eine den Grundkörper und die Membran verbindende Materialschicht eingebettet.

Insbesondere ist er vorteilhafterweise in eine Dichtung eingebettet, die eine zwischen dem Grundkörper und der Membran gebildete Kammer verschließt.

Bei einer Druckmeßzelle, deren Grundkörper und/oder Membran aus einem Keramikmaterial bestehen, ist eine solche Dichtung vorteilhafterweise aus einem Glas gebildet.

Zweckmäßigerweise umfassen die Temperatursensoren jeweils ein Widerstandselement mit temperaturabhängigem Widerstand. Ein solches Widerstandselement kann auf einfache Weise flächig, mit einer geringen Ausdehnung in Richtung des erwarteten Temperaturgradienten, erzeugt werden.

Um ein möglichst großes und rauscharmes Temperaturmeßsignal zu erhalten, ist es zweckmäßig, daß das Widerstandselement des ersten Temperatursensors sich über im wesentlichen den gesamten Umfang der Meßzelle erstreckt. Ein Nebeneffekt dieser Anordnung des Widerstandselements ist, daß der aus dem Widerstandswert des Widerstandselements bestimmbare Temperaturwert einen Mittelwert über im wesentlichen den gesamten Umfang der Membran darstellt und somit einen Mittelwert über die gesamte Fläche der Membran sehr nahe kommt.

Um auf einer gegebenen Umfangslänge der Dichtung eine große Leiterlänge des Widerstandselements unterzubringen, ist das Widerstandselement vorzugsweise mäanderartig ausgebildet.

Weitere Merkmale und Vorteile der Erfindung ergeben sich aus der nachfolgenden Beschreibung eines Ausführungsbeispiels mit Bezug auf die beigefügten Zeichnungen. Es zeigen:
Figur 1 eine erfindungsgemäße Druckmeßzelle in einem axialen Schnitt;
Figur 2 einen Schnitt durch die Druckmeßzelle der Figur 1 entlang der Ebene A-A.
Figur 3 eine Draufsicht auf die Rückseite des Grundkörpers der Druckmeßzelle aus Figur 1;
Figuren 4 und 5 jeweils Schnitte entlang der Ebene A-A durch Abwandlungen der Druckmeßzelle aus Figur 1;
Figur 6 einen exemplarischen zeitlichen Verlauf der Meßsignale der Temperatursensoren.

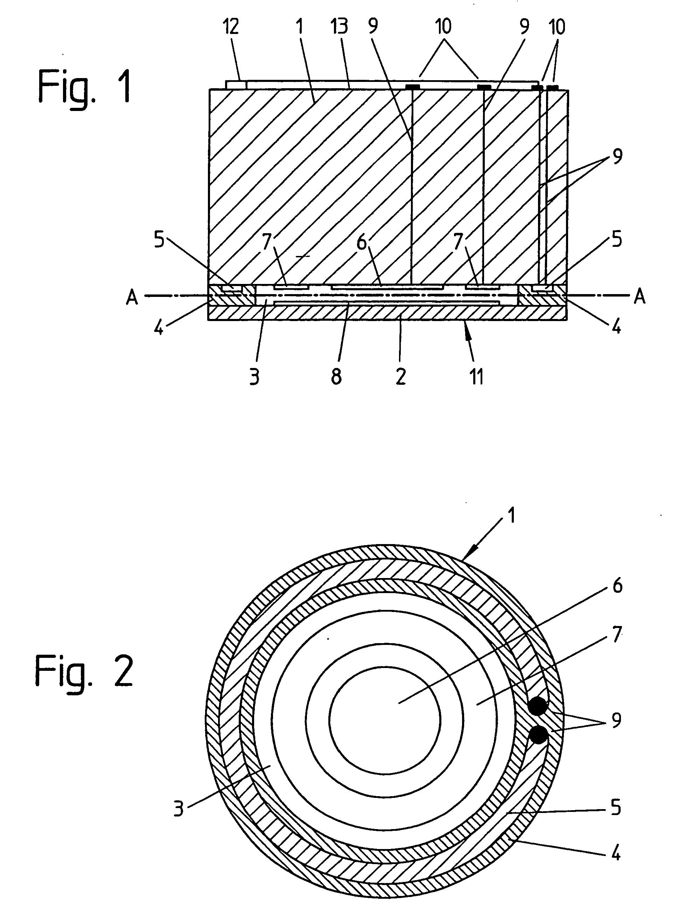

Figur 1 zeigt die erfindungsgemäße Druckmeßzelle in einem ersten Schnitt. Die Druckmeßzelle umfaßt einen im wesentlichen zylindrischen Grundkörper 1 und eine Membran 2, jeweils aus einem Keramikmaterial, die durch eine sich ringförmig entlang der Ränder der einander zugewandten Stirnseiten von Grundkörper 1 und Membran 2 erstreckende Materialschicht 4 beabstandet gehalten sind. Die Materialschicht 4 besteht aus einem Glaswerkstoff. Sie umschließt gemeinsam mit dem Grundkörper 1 und der Membran 2 dicht eine flachzylindrische Kammer 3. Der Grundkörper 1 trägt im Bereich der Kammer 3 an seiner Stirnfläche eine zentral angeordnete Elektrode 6 und eine sich konzentrisch dazu erstreckende Ring-elektrode 7. Durchkontaktierungen 9 verbinden die zwei Elektroden mit Anschlußfeldern 10 an der Rückseite des Grundkörpers 1. An der gegenüberliegenden Seite der Kammer 3 trägt die Membran 2 eine kontaktierte Gegenelektrode 8. Die Membran 2 ist durch den Druck eines auf ihre Außenfläche 11 wirkenden Mediums verformbar. Die Verformung der Membran verändert die Kapazität des von den Elektroden 6, 7, 8 gebildeten Kondensators. Diese Kapazität oder eine von ihr abgeleitete Größe kann als das nicht temperaturkompensierte Druckmeßsignal der Meßzelle aufgefaßt werden. Eine solche abgeleitete Größe kann z.B. die Resonanzfrequenz eines Schwingkreises sein, der die Druckmeßzelle als Kondensator enthält.

Ein erster Temperatursensor ist durch ein Widerstandselement 5 mit temperaturabhängigem Widerstandswert gebildet, das in die als Dichtung für die Kammer 3 fungierende Materialschicht 4 eingebettet ist. Zwei entgegengesetzte Enden des langgestreckten Widerstandselements 5 sind über Durchkontaktierungen 9 mit Anschlußfeldern 10 an der Rückseite des Grundkörpers 1 verbunden.

Bei dem in Figur 1 gezeigten Ausführungsbeispiel befindet sich das Widerstandselement 5 in direktem Kontakt mit der Oberfläche des Grundkörpers 1 und ist von der Membran 2 durch einen Teil der Materialschicht 4 getrennt. Die direkte Anbringung des Widerstandselements 5 auf dem Grundkörper 1 erleichtert die Herstellung einer elektrischen Verbindung zwischen dem Widerstandselement und der Umgebung über die Durchkontaktierungen 9. Die vom Grundkörper 1 abgewandte Oberfläche des Widerstandselements 5 bildet eine große Wärmeaustauschfläche mit der Materialschicht 4 und über diese mit der Membran 2 und dem (nicht dargestellten) Medium, das den zu messenden Druck auf die Membran 2 ausübt.

Ein zweiter Temperatursensor ist durch ein Widerstandselement 12 mit temperaturabhängigem Widerstandswert gebildet, das auf der von der Membran 2 abgewandten Rückseite 13 des Grundkörpers 1 angebracht ist. Das Widerstandselement 12 kann zum schutz vor Beschädigung mit einer in der Figur nicht dargestellten Schmutzschicht überzogen sein, die die gleiche Zusammensetzung wie die Materialschicht 4 haben kann.

Figur 2 zeigt anhand eines Schnitts entlang der Ebene A-A von Figur 1 genauer das als erster Temperatursensor fungierende temperaturabhängige Widerstandselement 5.

Man erkennt in Figur 2 in der Draufsicht die Zentralelektrode 6 und die Ringelektrode 7 des Grundkörpers 1 sowie, konzentrisch dazu am Rand des Grundkörpers 1 angeordnet, die Materialschicht 4. Im Innern der Materialschicht 4 verläuft das temperaturabhängige Widerstandselement 5 über fast den gesamten Umfang des Grundkörpers 1, mit Ausnahme des Abstandes zwischen den zwei Durchkontaktierungen 9, die zur Versorgung des Widerstandselements 5 mit einem Meßstrom dienen.

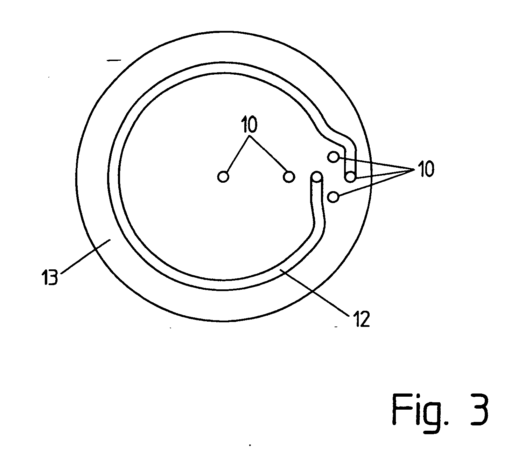

Figur 3 zeigt eine Draufsicht auf die Rückseite 13 des Grundkörpers 1. Das als zweite Temperatursensor fungierende Widerstandselement 12 erstreckt sich im wesentlichen der gleichen Form wie das Widerstandselement 5 zwischen zwei Anschlußfeldern 10 über praktisch den gesamten Umfang des Grundkörpers.

Die Druckmeßzelle kann auf einfache Weise hergestellt werden, indem auf dem Grundkörper 1 zunächst in einer Dickschicht- oder Dünnschichttechnik das temperaturabhängige Widerstandselement 5 ausgebildet wird, auf diesem dann ein Vorläufermaterial für die Materialschicht 4 aufgetragen und auf dem Vorläufermaterial die Membran 2 angeordnet wird. Durch Erhitzen und Verglasen des vorläufermaterials kommt die dadurch gebildete glasartige Materialschicht 4 in einen innigen Kontakt mit dem Grundkörper 1 und dem Widerstandselement 5 einerseits und der Membran 2 andererseits, was zum einen die Dichtigkeit der Kammer 2 gegen das Medium, dessen Druck gemessen werden soll, gewährleistet, und zum anderen einen hocheffizienten Wärmeaustausch von der mit dem Medium in Kontakt befindlichen Membran 2 über die Materialschicht 4 mit dem Widerstandselement 5 ermöglicht. Die Herstellung des Widerstandselements 12 kann in gleicher Weise erfolgen

Je nach vorgesehenem Meßbereich der Druckmeßzelle bzw. der erforderlichen Festigkeit der Membran 2 beträgt der Abstand zwischen der Außenfläche 11 der Membran und dem Widerstandselement 5 typischerweise 0,1 bis 3, vorzugsweise 0,2 bis 2 mm.

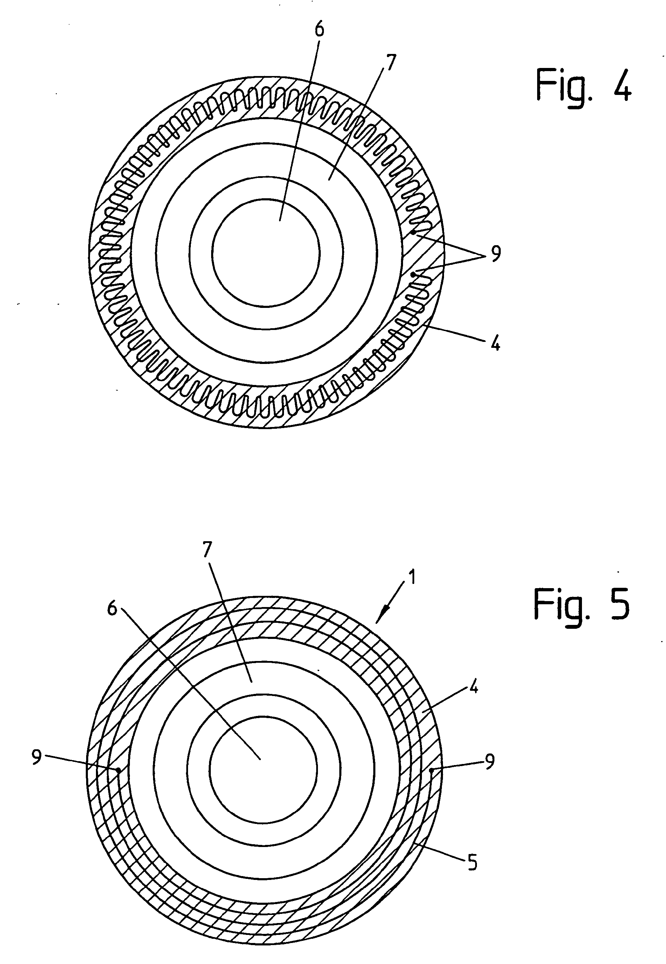

Die Figuren 4 und 5 zeigen jeweils anhand von Schnitten entlang der Ebene A-A von Figur 1 abgewandelte Ausgestaltungen des als erster Temperatursensor fungierenden temperaturabhängigen Widerstandselements 5, wobei sich versteht, daß entsprechende Ausgestaltungen auch für das zweite Widerstandselement 12 in Betracht kommen.

Bei der in Figur 4 dargestellten Ausgestaltung der Druckmeßzelle verläuft das temperaturabhängige Widerstandselement 5 auf einem mäanderartigen oder zickzackförmigen Weg um im wesentlichen den gesamten Umfang des Grundkörpers 1 von einer der zwei Durchkontaktierungen 9 zur anderen. Diese Ausgestaltung erlaubt es, ein Widerstandselement 5 unterzubringen, dessen ausgestreckte Länge wesentlich größer ist als die Umfangslänge des Grundkörpers, das einen hohen Widerstandswert und eine dementsprechend starke Änderung des Widerstandswertes mit der Temperatur aufweist.

Bei der Ausgestaltung der Figur 5 verläuft das temperaturabhängige Widerstandselement 5 auf einem spiralartigen Weg innerhalb der Materialschicht 4. Auch bei dieser Anordnung kann die ausgestreckte Länge des Widerstandselements 5 ein Vielfaches der Umfangslänge des Grundkörpers 1 erreichen. Die Besonderheit dieser Ausgestaltung ist, daß sie eine weitgehend willkürliche Positionierung der Durchkontaktierungen 9 am Grundkörper 1 zuläßt, z.B. an diametral gegenüberliegenden Positionen wie in Figur 4 gezeigt, weil die Länge, die das Widerstandselement 5 erreichen kann, hier nicht proportional zum Winkelabstand der zwei Durchkontaktierungen 9 ist.

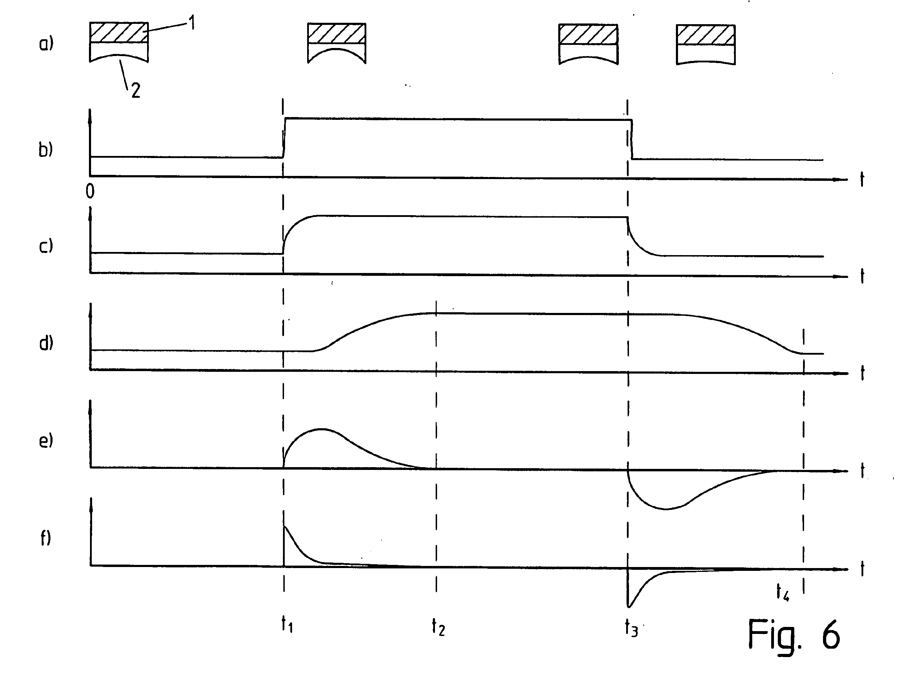

Figur 6 veranschaulicht anhand eines Zeitdiagramms die Funktionsweise des erfindungsgemäßen Temperatursensors, wenn er einem Medium mit wechselnder Temperatur ausgesetzt ist. Dabei zeigt die Zeile b den zeitlichen Verlauf der Temperatur des Mediums. In einem Zeitintervall von 0 bis t₁ liegt diese Temperatur auf einem gleichbleibenden, niedrigen Wert. Die Druckmeßzelle befindet sich in thermischem Gleichgewicht mit dem Medium; die von dem ersten Temperatursensor gemessene Temperatur, dargestellt in Zeile c, und die von dem weiter von dem Medium entfernten zweiten Temperatursensor gemessene Temperatur, dargestellt in Zeile d, sind gleich.

Die Membran 2 der Druckmeßzelle weist eine mittlere Krümmung auf, dargestellt in dem ersten schematischen Querschnitt der Zeile a, die allein durch den auf die Membran wirkenden Druck des Mediums bestimmt ist.

Zum Zeitpunkt t₁ steigt die Temperatur des Mediums abrupt auf einen höheren Wert. Die Temperatur der Membran 2 folgt dieser Temperaturerhöhung schnell, da sie eine geringe Dicke aufweist, mit dem Medium auf ihrer gesamten Oberfläche in Kontakt ist und zum Grundkörper 1 hin auf dem größten Teil ihrer Fläche durch die Kammer 3 thermisch isoliert ist. Wie in Zeile d gezeigt, ist der Grundkörper 1 erst mit einer beträchtlichen Verzögerung in der Lage, der Temperaturerhöhung zu folgen, so daß der zweite Temperatursensor erst zu einem späteren Zeitpunkt t₂ eine Gleichgewichtstemperatur erreicht. Während des Zeitintervalls t₁ bis t₂ ist der Grundkörper 1 somit kälter als die Membran 2, und die thermische Ausdehnung der Membran ist größer als die des Grundkörpers. Da Grundkörper und Membran aber an ihrem Umfang steif verbunden sind, kann sich die Membran in radialer Richtung nicht weiter ausdehnen als der Grundkörper. Die Erwärmung führt deshalb zu einer verstärkten Krümmung der Membran 2, dargestellt im zweiten Schnitt der Zeile a, und damit zu einer Abstandsverringerung zwischen der Membran und dem Grundkörper, die im thermischem Gleichgewicht einem wesentlich höheren Druck entsprechen würde als dem, dem die Membran aktuell ausgesetzt ist. Anhand des der in Zeile e gezeigten Differenz zwischen den von den zwei Temperatursensoren erfaßten Temperaturen ist jedoch eine nachgeordnete Auswerteschaltung in der Lage, zu erkennen, daß sich die Druckmeßzelle in einem thermischen Ungleichgewicht befindet und daß deshalb die Gefahr einer nicht mit dem Druck korrelierten Membranverformung gegeben ist.

Einer einfachen Ausgestaltung zufolge kann eine solche Auswerteschaltung die von der Druckmeßzelle gelieferten Druckmeßwerte verwerfen, wenn die Differenz der von den zwei Temperatursensoren erfaßten Temperaturen einen gegebenen Grenzbetrag überschreitet. Es ist jedoch auch möglich, anhand der Temperaturdifferenz das Ausmaß der zu erwartenden, durch das thermische Ungleichgewicht bedingten Verformung der Membran zu berechnen und den von der Druckmeßzelle gelieferten Wert entsprechend dieser Verformung zu bereinigen bzw. zu kompensieren.

In der praktischen Anwendung kann zur Durchführung dieser Kompensation in der Auswerteschaltung eine Kennlinie gespeichert sein, die einen Wert der Verfälschung der Druckmessung als Funktion der Temperaturdifferenz zwischen den zwei Sensoren angibt, und die Kompensation erfolgt durch Addition oder Subtraktion dieses Wertes von dem nicht temperaturkompensierten Druckmeßsignal. Auf diese Weise können auch dann brauchbare Druckmeßwerte gewonnen werden, wenn sich die Druckmeßzelle nicht im thermischen Gleichgewicht befindet.

Der dritte schematische Querschnitt der Zeile a zeigt die Druckmeßzelle, nachdem sie das thermische Gleichgewicht bei hoher Temperatur wieder erreicht hat. Wenn Grundkörper und Membran aus dem gleichen Keramikmaterial bestehen bzw. gleiche thermische Ausdehnungskoeffizienten besitzen, ist die Krümmung der Membran 2 in diesem Zustand die gleiche, wie unter dem gleichen Druck bei niedriger Temperatur.

Zum Zeitpunkt t₃ nimmt die Temperatur des Mediums wieder abrupt ab, worauf sich die Membran 2 schneller zusammenzieht als der Grundkörper 1. Dies führt zu deren in dem vierten Schnitt der Zeile a gezeigten, im Vergleich zum thermischen Gleichgewichtszustand verringerten Krümmung der Membran 2. Der Abstand zwischen Membran 2 und Grundkörper 1 ist somit vergrößert, und der von der Druckmeßzelle gelieferte unkompensierte Druckmeßwert entspricht einem geringeren Druck als dem, der tatsächlich auf die Membran einwirkt. Auch diese Verfälschung kann durch eine rechnerische Korrektur auf Grundlage der Differenz der von den zwei Temperatursensoren erfaßten Temperaturen korrigiert werden.

Bei der Beschreibung der Figur der Figur 6 wurde davon ausgegangen, daß die druckbeaufschlagte Membran 2 konkav gekrümmt ist, so daß eine thermische Ausdehnung der Membran einer Verringerung des Abstandes zwischen Membran und Grundkörper und damit einem scheinbar erhöhten Druck entspricht. Selbstverständlich ist die Erfindung auch anwendbar auf eine konvexe Membran, bei der eine Temperaturerhöhung zu einer Erhöhung des Abstandes vom Grundkörper 1 führen würde.

Sie ist ferner auch nicht beschränkt auf Druckmeßzellen mit kapazitiver Erfassung der Verformung der Membran, sondern ist für alle Druckmeßzellen mit einem beweglichen Element anwendbar, dessen Bewegung nicht nur von dem zu messenden Druck, sondern auch von Temperaturänderungen beeinflußt wird und dessen Position das nicht kompensierte Druckmeßsignal bestimmt.

### Bezugszeichenliste

- 1.: Grundkörper
- 2.: Membran
- 3.: Kammer
- 4.: Dichtung
- 5.: Widerstandselement
- 6.: Zentralelektrode
- 7.: Ringelektrode
- 8.: Gegenelektrode
- 9.: Durchkontaktierung
- 10.: Anschlußfelder
- 11.: Außenfläche
- 12.: Widerstandselement
- 13.: Rückseite des Grundkörpers

## Patentansprüche

1. Druckmeßzelle mit einem Grundkörper (1), einer an dem Grundkörper (1) angeordneten, durch einen zu messenden Druck verformbaren Membran (2) und einem ersten Temperatursensor sowie einen zweiten Temperatursensor, der von dem ersten Temperatursensor in Richtung eines Temperaturgradienten beabstandet ist, **dadurch gekennzeichnet, daß** der erste Temperatursensor in eine den Grundkörper (1) und die Membran (2) verbindende Materialschicht (4) eingebettet ist.

2. Druckmeßzelle nach Anspruch 1, **dadurch gekennzeichnet, daß** die Materialschicht (4) eine Dichtung ist, die eine zwischen dem Grundkörper (1) und der Membran (2) gebildete Kammer (3) verschließt.

3. Druckmeßzelle nach Anspruch 1 oder 2, **dadurch gekennzeichnet, daß** der Grundkörper (1) und/oder die Membran (2) aus einem Keramikmaterial und die Materialschicht (4) aus einem Glas gebildet sind.

4. Druckmeßzelle nach einem der Ansprüche 1 bis 3, **dadurch gekennzeichnet, daß** der erste Temperatursensor an der Membran angeordnet ist.

5. Druckmeßzelle nach einem der Ansprüche 1 bis 4, **dadurch gekennzeichnet, daß** der erste Temperatursensor zwischen der Membran (2) und dem Grundkörper (1) angeordnet ist.

6. Druckmeßzelle nach einem der Ansprüche 1 bis 5, **dadurch gekennzeichnet, daß** der Abstand zwischen dem ersten Temperatursensor und einer dem zu messenden Druck ausgesetzten Außenfläche (11) der Membran (2) zwischen 0,1 und 3 mm beträgt.

7. Druckmeßzelle nach einem der vorhergehenden Ansprüche, **dadurch gekennzeichnet, daß** der erste und/oder zweite Temperatursensor ein Widerstandselement (5, 12) mit temperaturabhängigem Widerstandswert umfaßt.

8. Druckmeßzelle nach Anspruch 7, **dadurch gekennzeichnet, daß** das Widerstandselement (5) des ersten Temperatursensors sich über im wesentlichen den gesamten Umfang der Materialschicht (4) erstreckt.

9. Druckmeßzelle nach Anspruch 7 oder 8, **dadurch gekennzeichnet, daß** das Widerstandselement (5) mäanderartig verläuft.

10. Druckmeßzelle nach einem der vorhergehenden Ansprüche, **dadurch gekennzeichnet, daß** der zweite Temperatursensor an einer von der Membran abgewandten Seite des Grundkörpers angeordnet ist.

11. Verfahren zum Ermitteln des Drucks eines Fluids mit Hilfe einer Druckmeßzelle, die einen Grundkörper, eine an dem Grundkörper angeordnete, durch den Druck des Fluids verfombare Membran und einen an der Membran angeordneten ersten Temperatursensor aufweist, **dadurch gekennzeichnet, daß** wenn eine Differenz zwischen der von dem ersten Temperatursensor und einem zweiten, in Richtung eines Temperaturgradienten beabstandeten zweiten Temperatursensor gemessenen Temperaturen auf einen Temperaturgradienten in der Druckmeßzelle hinweist, eine durch den Temperaturgradienten verursachte Verfälschung des Druckmeßsignals berechnet und der von der Druckmeßzelle gelieferte Druckmeßwert um die berechnete Verfälschung korrigiert wird.

## Claims

1. A pressure measuring cell with a body (1), a membrane (2), which is disposed on the body (1) and can be deformed by a pressure to be measured, and a first temperature sensor and also a second temperature sensor, which is spaced from the first temperature sensor in the direction of a temperature gradient,
**characterised in that** the first temperature sensor is embedded in a layer of material (4) that connects the body (1) and the membrane (2).

2. A pressure measuring cell according to Claim 1,
**characterised in that** the layer of material (4) is a seal that closes the chamber (3) formed between the body (1) and the membrane (2).

3. A pressure measuring cell according to Claim 1 or 2,
**characterised in that** the body (1) and/or the membrane (2) is/are made from a ceramic material and the layer of material (4) is made from glass.

4. A pressure measuring cell according to one of Claims 1 to 3,
**characterised in that** the first temperature sensor is disposed at the membrane.

5. A pressure measuring cell according to one of Claims 1 to 4,
**characterised in that** that the first temperature sensor is disposed between the membrane (2) and the body (1).

6. A pressure measuring cell according to one of Claims 1 to 5,
**characterised in that** the distance between the first temperature sensor and an outer surface (11) of the membrane (2) that is subjected to the pressure to be measured is between 0.1 and 3 mm.

7. A pressure measuring cell according to one of the preceding claims,
**characterised in that** the first and/or the second temperature sensor comprises/comprise a resistance element (5,12) with a temperature-dependent resistance value.

8. A pressure measuring cell according to Claim 7,
**characterised in that** the resistance element (5) of the first temperature sensor essentially extends over the entire circumference of the layer of material (4).

9. A pressure measuring cell according to Claim 7 or 8,
**characterised in that** the resistance element (5) extends in a meander-shaped fashion.

10. A pressure measuring cell according to one of the preceding Claims,
**characterised in that** the second temperature sensor is disposed on a side of the body that faces away from the membrane.

11. A method for determining the pressure of a fluid with the aid of a pressure measuring cell containing a body, a membrane that is disposed on the body and can be deformed by the pressure of the fluid, and a first temperature sensor disposed on the membrane,
**characterised in that** if a difference between the temperatures measured by the first temperature sensor and a second temperature sensor that is spaced apart in the direction of a temperature gradient indicates a temperature gradient in the pressure measuring cell, an error in the pressure measuring signal caused by the temperature gradients is calculated and the pressure reading delivered by the pressure measuring cell is corrected by the calculated error.

## Revendications

1. Cellule de mesure de pression comportant un corps de base (1), une membrane (2) installée sur le corps de base (1) et déformable par la pression à mesurer ainsi qu'un premier capteur de température et un second capteur de température écarté du premier capteur de température dans la direction d'un gradient de température,
**caractérisée en ce que**
le premier capteur de température est intégré dans une couche de matière (4) reliant le corps de base (1) et la membrane (2).

2. Cellule de mesure de pression selon la revendication 1,
**caractérisée en ce que**
la couche de matière (4) est un joint qui ferme une chambre (3) formée entre le corps de base (1) et la membrane (2).

3. Cellule de mesure de pression selon l'une quelconque des revendication 1 ou 2,
**caractérisée en ce que**
le corps de base (1) et/ou la membrane (2) sont réalisés en matière céramique et la couche de matière (4) est en verre.

4. Cellule de mesure de pression selon l'une quelconque des revendications 1 à 3
**caractérisée en ce que**
le premier capteur de température est prévu sur la membrane.

5. Cellule de mesure de pression selon l'une quelconque des revendications 1 à 4
**caractérisée en ce que**
le premier capteur de température est installé entre la membrane (2) et le corps de base (1).

6. Cellule de mesure de pression selon l'une quelconque des revendications 1 à 5
**caractérisée en ce que**
la distance entre le premier capteur de température et la surface extérieure (11) de la membrane (1) exposée à la pression à mesurer est comprise entre 0,1 et 3 mm.

7. Cellule de mesure de pression selon l'une quelconque des revendications précédentes,
**caractérisée en ce que**
le premier et/ou le second capteur de température comprend un élément résistant (5, 12) dont la résistance dépend de la température.

8. Cellule de mesure de pression selon la revendication 7,
**caractérisée en ce que**
l'élément résistant (5) du premier capteur de température occupe pratiquement toute la périphérie de la couche de matière (4).

9. Cellule de mesure de pression selon l'une quelconque des revendications 7 ou 8,
**caractérisée en ce que**
l'élément résistant (5) a une forme de méandre.

10. Cellule de mesure de pression selon l'une quelconque des revendications précédentes,
**caractérisée en ce que**
le second capteur de température est prévu sur le côté du corps de base non tourné vers la membrane.

11. Procédé de détermination de la pression d'un fluide à l'aide d'une cellule de mesure de pression comprenant un corps de base, une membrane installée sur le corps de bas et déformable par la pression du fluide ainsi qu'un premier capteur de température associé à la membrane,
**caractérisé en ce que**
si la différence entre la température mesurée par le premier capteur de température et un second capteur de température distant du premier dans la direction d'un gradient de température, indique un gradient de température dans la cellule de mesure de pression, il calcule l'erreur du signal de mesure de pression, engendrée par le gradient de température et corrige la valeur de mesure de la pression fournie par la cellule de mesure de pression, avec l'erreur ainsi calculée.
